# EUROPÄISCHE PATENTANMELDUNG

(11) **EP 0 794 423 A1**
(43) Veröffentlichungstag der Anmeldung: **10.09.1997**
(21) Anmeldenummer: 97101950.0
(22) Anmeldetag: 07.02.1997
(51) Int. Cl.: G01N 21/03, G01N 21/35

(54) **Gasanalysator**

(30) Priorität: 06.03.1996 DE 19608604
(71) Anmelder: Endress + Hauser Conducta Gesellschaft für Mess- und Regeltechnik mbH + Co., D-70839 Gerlingen (DE)
(72) Erfinder: Bytyn, Wilfried, 70469 Stuttgart (DE); Seefeld, Peter, 74206 Bad Wimpfen (DE); Vaihinger, Stefan, 72072 Tübingen (DE)
(74) Vertreter: Winter, Martina

(57) **Zusammenfassung**

Gasanalysator (20) zur kontinuierlichen Bestimmung der Konzentration eines Gases in einem Gasgemisch, mit einer Meßküvette (21), einer Strahlungsquelle (23), einem Detektor (31) und Einrichtungen zur Signalverarbeitung (3, 7), **dadurch gekennzeichnet**, daß die Strahlungsquelle (23) in der Meßküvette (21) verschiebbar angeordnet ist.

## Beschreibung

Die Erfindung betrifft einen Gasanalysator zur kontinuierlichen Bestimmung der Konzentration eines Gases in einem Gasgemisch mit einer Energiequelle, einer Meßküvette, einer Strahlungsquelle, einem Detektor und Einrichtungen zur Signalverarbeitung. Die Erfindung betrifft ferner eine Meßküvette zur photometrischen Messung der Konzentration eines Gases in einem Gasgemisch.

Die Gasanalyse mit Hilfe von Meßgeräten, die nach dem Prinzip der nicht-dispersiven Infrarotspektroskopie (NDIR) arbeiten, ist seit langem bekannt. Die Einsatzbereiche sind weit gespannt und umfassen unter anderem die Rauchgasanalytik, die Prozeßmesstechnik in der chemischen Verfahrenstechnik sowie neuerdings verstärkt den Bereich Raumluftmessung und Klima- bzw. Luftgüteregelung in Gebäuden.

Der prinzipielle Aufbau eines Gasanalysators ist im wesentlichen stets gleich. Die von einer Strahlungsquelle emittierte Strahlung durchstrahlt eine Meßküvette mit dem zu messenden Gas und trifft auf einen Detektor. Auf dem Weg durch die Meßküvette wird die von der Strahlungsquelle abgestrahlte Anfangsintensität durch Absorptionsprozesse abgeschwächt. Für den Zusammenhang zwischen zu bestimmender Gaskonzentration und Intensitätsabschwächung gilt das Lambert-Beer'sche Gesetz. Die Erzeugung eines Detektorsignals mit ausreichendem Signal/Rausch-Verhältnis erfordert eine Modulation der vom Strahler ausgehenden Strahlung. Das zu messende Gas gelangt entweder im Diffusionsbetrieb oder mit Hilfe einer Pumpe in die Meßküvette.

Meßgeräte der o.g. Art sind z.B. aus der US 5,163,332 und der GB 1 398 977 bekannt. Die US 5,163,332 beschreibt einen NDIR-Einstrahl-Gasanalysator mit einer Meßküvette, der im Diffusionsmodus betrieben werden kann. Die Meßküvette besteht dabei aus einem geschlossenen Rohr, welches mehrere, über die Rohrlänge verteilte diskrete Gaszugangsöffnungen besitzt. Der Gasaustausch erfolgt über eine Membran, die in den Gaszugangsöffnungen aufgespannt ist. Die Strahlungsquelle und der Detektor sind an den beiden Enden der rohrartigen Meßküvette fixiert. Durch das Membransystem wird der Meßaufbau vergleichsweise kompliziert. Die GB 1 398 977 beschreibt ebenfalls ein Einstrahl-Infrarot-Photometer für die Messung von Gasen, wobei die als Strahlungsquelle dienende Lampe mit Hilfe eines Oszillators getaktet wird. Die auf diese Weise mit einer Taktfrequenz von einigen Hz modulierte Strahlung passiert die Gasmeßstrecke und gelangt durch ein optisches Filter, welches für eine bestimmte Wellenlänge durchlässig ist, an einen strahlungsempfindlichen Detektor. Die Meßküvette besteht aus einem rundum geschlossenen Röhrchen mit reflektierender Innenfläche. Die Strahlungsquelle und der Detektor befinden sich an den jeweiligen Enden des Röhrchens. Der Gaszutritt erfolgt durch eine kleine Öffnung im Bereich des optischen Filters bzw. Detektors. Die Verwendung einer derart getakteten Lichtquelle besitzt den Vorteil, daß kleine, leichte, preisgünstige, prinzipiell batteriebetreibbare und tragbare, aber trotzdem leistungsfähige Gasanalysatoren realisierbar sind.

Nachteilig ist jedoch, daß die bekannten Küvetten nur für einen engen Meßbereich tauglich sind, weil die Beziehung zwischen Meßgaskonzentration und Ausgangssignale nicht linear ist und die Messung mit zunehmender Konzentration ungenau wird.

**Aufgabe** der Erfindung ist es, Gasanalysatoren der o.g. Art derart weiterzubilden, daß die genannten Nachteile beseitigt werden, insbesondere eine optimale Anpassung der Küvettenlängen an den jeweils zu erfassenden Gaskonzentrationsbereich möglich wird.

Die **Lösung** besteht darin, daß die Strahlungsquelle in der Meßküvette verschieblich angeordnet ist.

Der erfindungsgemäße Gasanalysator ermöglicht eine leicht handhabbare Anpassung der Absorptionsstrecke zwischen Strahlungsquelle und Detektor an unterschiedliche Konzentrationsbereiche des Meßgases und somit eine Optimierung der Meßgenauigkeit im jeweils zu überwachenden Konzentrationsbereich, entsprechend dem logarithmischen Dekrement in einem Bereich über 5-7 Größenordnungen.

Diese Meßbereichsanpassung ist bspw. für die Messung von Kohlendioxid (CO₂) von Interesse, da die zu messenden CO₂-Konzentrationsbereiche je nach Einsatzfall sehr unterschiedlich sein können. Im Bereich der Klima- und Lüftungstechnik sind CO₂-Konzentrationen zwischen ca. 350ppm (Gehalt der Außenluft) und 5000ppm (MAK-Wert) zu überwachen. In der Rauchgasmeßtechnik liegen die zu messenden CO₂-Konzentrationen typischerweise zwischen 10 und 20 Vol.-%. In speziellen Einsatzfällen sind auch CO₂-Konzentrationen bis 100 Vol.-% (bei geringerer Anforderung an die Auflösung) zu überwachen.

Beim Durchtritt der Strahlung durch das Meßmedium tritt durch Absorption eine Abschwächung der Intensität der Strahlung ein. Die Zusammenhänge können quantitativ mit Hilfe des Lambert-Beer'schen Gesetzes beschrieben werden: ln I/I₀ = - εcd.

Das Verhältnis von durchgelassener Strahlungsintensität I und Quellintensität Io nimmt exponentiell als Funktion der Konzentration c und der Meßstreckenlänge (Küvettenlänge) d ab. Der Proportionalitätsfaktor ε ist der Extinktionskoeffizient.

Photometrische Meßverfahren besitzen einen durch die Optik und die Elektronik des Meßgerätes bestimmten optimalen Arbeitspunkt für die Extinktion. Schon aus dem voranstehend wiedergegebenen Lambert-Beer'schen Gesetz ist ersichtlich, daß die Beziehung nicht linear ist und daß es einen idealen Arbeitsbereich für Extinktionsmessung gibt. Der erfindungsgemäße Gasanalysator ermöglich es nun, daß auf mechanische Weise billig und einfach die Schichtdicke d, d.h. der Abstand zwischen Strahlungsquelle und Detektor, auch im Falle sehr unterschiedlicher zu überwachender Gaskonzentrationsbereiche variiert werden und die Extinktion durch diese einfache mechanische Justierung stets im optimalen Arbeitsbereich gehalten werden kann. Der erfindungsgemäße Gasanalysator ermöglicht daher eine einsatzspezifische Optimierung der Meßgenauigkeit für beliebige Konzentrationsbereiche.

Der Gasanalysator ist vorteilhafterweise so konzipiert, daß die Strahlungsquelle in einem in der Meßküvette vorgesehenen Längsschlitz verschieblich fixiert ist, z.B. mit einer Klemmschraube fixiert ist. Als besonders günstig hat es sich erwiesen, die Strahlungsquelle in einer ggf. mit einem Reflektor versehenen Halterung anzuordnen, die ihrerseits mit einer Gewindebohrung für die Klemmschraube versehen ist. Um die größtmögliche Variation der Schichtdicke zu gewährleisten, ist der Detektor an einem Ende der Meßküvette fixiert. Außerdem ist der Längsschlitz, in dem die Strahlungsquelle verschieblich fixiert ist, möglichst lang und erstreckt sich vorteilhafterweise über die gesamte Länge der Meßküvette. Das hat den weiteren Vorteil, daß die Diffusion des zu analysierenden Gasgemisches vereinfacht wird. Der schnelle Gasaustausch, d.h. die gute Durchlüftung durch den Längsschlitz, führt zu einer kurzen T_{g0}-Zeit. Der Stoffaustausch wird schneller. Auf eine Pumpe o.ä. kann verzichtet werden. Die Ansprechzeit wird verringert.

Die Küvette ist vorteilhafterweise ein Metallröhrchen, z.B. aus Aluminium oder Edelstahl, das eine diffus reflektierende Innenfläche zur Verbesserung seiner optischen Eigenschaften aufweisen kann.

Besonders vorteilhaft ist es, zwischen Strahlungsquelle und Detektor ein Interferenzfilter anzuordnen. Je nach Durchlaßbereich dieses Filters kann der erfindungsgemäße Gasanalysator für jedes zu analysierende Gas angepaßt werden, das im Wellenlängenbereich der von der Strahlungsquelle emittierten Strahlung absorbiert.

Der Gasanalysator sitzt vorteilhafterweise in einem mindestens teilweise gasdurchlässigen Gehäuse, das auf einer Seite eine Öffnung aufweisen kann, die z.B. mit einem Metallfaservlies überzogen ist. Damit wird für das Meßgas eine großflächige Einlaßzone geschaffen, mit dem Vorteil verbesserter Diffusions- und Konvektionseigenschaften. Der dadurch verwirklichte schnelle Stoffaustausch zwischen Meßgasraum und Küvette führt ebenfalls zu kurzen Ansprechzeiten des erfindungsgemäßen Gasanalysators bei der Gasbeaufschlagung. Dem Stoffaustausch durch Diffusion kann auch ein konvektiver Stoffaustausch als Folge von Erwärmungsvorgängen im Bereich der Strahlungsquelle überlagert sein.

Die guten Rückhalteeigenschaften des Metallfaservlieses gegenüber Partikeln, Schwebstoffen und absetzbaren Verunreinigungen, führen zu einer verringerten Verschmutzungsneigung der Optik des Meßsystems. Der Einsatz des erfindungsgemäßen Gasanalysegeräts ist auch unter erschwerten Einsatzbedingungen, z.B. bei der Vermessung partikelbeladener Gasströme, möglich. Darüber hinaus wirkt das Metallfaservlies als Strömungsgleichrichter und minimiert mögliche Abhängkeiten des Meßsignals von aerodynamischen Strömungsverhältnissen im Meßgasraum. Das Metallfaservlies kann durch Rückspülen gereinigt werden.

Es ist vorteilhaft, daß die die Optik des erfindungsgemäßen Gasanalysegeräts bildenden Bauelemente in gutem thermischem Kontakt zueinander stehen. Dies verringert die Gefahr thermisch bedingter Dejustierungen der Optik und dadurch verursachte Meßfehler.

Gegenstand der Erfindung ist ferner eine verbesserte Meßküvette zur Messung der Konzentration eines Gases in einem Gasgemisch in Form eines länglichen Röhrchens, das der Länge nach geschlitzt ist. Die Meßküvette besteht vorzugsweise aus Metall, z.B. aus Edelstahl und weist vorzugsweise eine nichtspiegelnde reflektierende Innenfläche auf, um eine diffuse Reflexion des Strahles im Innern der Meßküvette zu ermöglichen. Die erfindungsgemäße Meßküvette besitzt an ihrer Unterseite vorteilhafterweise eine oder mehrere Bohrungen, mit der sie in einem Gehäuse fixiert werden kann.

Ein Ausführungsbeispiel der vorliegenden Erfindung wird im folgenden anhand der beigefügten Zeichnungen näher beschrieben. Es zeigen:
- Figur 1: eine Schaltsymbolskizze des erfindungsgemäßen Gasanalysators;
- Figur 2a: eine perspektivische, teilweise schematische Darstellung des erfindungsgemäßen Gasanalysators in einem Gehäuse;
- Figur 2b, 2c: den Deckel des Gehäuses aus Figur 2a von oben bzw. von unten;
- Figur 3: eine Draufsicht auf eine erfindungsgemäße Meßküvette;
- Figur 4: eine Schnittansicht der Meßküvette aus Figur 3;
- Figur 5: einen Schnitt durch eine Halterung für eine Strahlungsquelle.

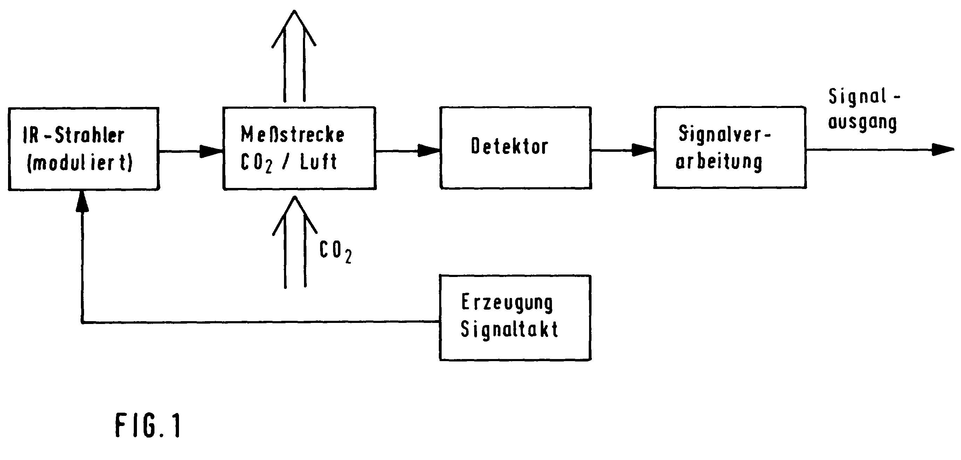

Die Schaltsymbolskizze in Figur 1 betrifft ein NDIR-Einstrahl-Photometer in Mikroprozessortechnologie. Als Ausführungsbeispiel wurde ein CO₂-Sensor gewählt. CO₂ besitzt ein Absorptionsmaximum bei einer Wellenlänge von 4,24 µm. Man benötigt daher als Strahlungsquelle eine Infrarot-Strahlungsquelle, z.B. in Form eines langlebigen, driftarmen, miniaturisierten IR-Strahlers. Im einfachsten und bevorzugten Fall kann dies ein Miniatur-Glühbirnchen sein. Auch Oberflächenstrahler in Dickschicht- und Dünnschichttechnologie sind als IR-Strahlungsquelle einsetzbar.

Zur Modulation wird die IR-Strahlungsquelle mit Hilfe eines Oszillators getaktet. Bei Verwendung einer Miniatur-Glühbirne beträgt die Taktfrequenz einige wenige Hz; der Einsatz von Dünnschichstrahlern ermöglicht Taktfrequenzen bis zu 100 Hz. Der Verzicht auf mechanisch bewegte Teile (z.B. ein Chopperrad) erlaubt eine miniaturisierte Bauform.

Die von der IR-Strahlungsquelle emittierte elektromagnetische Strahlung durchläuft die Meßstrecke mit dem zu messenden Gas und trifft nach Passieren eines Interferenzfilters auf einen Detektor. Das Interferenzfilter kann als diskretes Bauteil eingesetzt werden, aber auch im Detektor integriert sein. Der Durchlaßbereich des Interferenzfilters ist auf das Absorptionsmaximum einer spezifischen Absorptionsbande der zu bestimmenden Gaskomponente abgestimmt, im Beispiel auf die CO₂-Absorptionsbande bei 4,24 µm. Als Detektor findet ein infrarotempfindliches elektronisches Bauelement Verwendung, z.B. ein pyroelektrischer Detektor oder ein Thermopile. Auch Halbleiterbauelemente (PbS, PbSe) sind einsetzbar. Das Ausgangssignal des strahlungsempfindlichen Detektors wird mit einer phasensteuerbaren Wechselstromverstärkungschaltung mit abstimmbarer Nullpunktdurchlauferkennung erfaßt.

Das Takten der Strahlungsquelle, das z.B. bei Verwendung eines lediglich auf die Strahlungsintensität ansprechenden Detektors notwendig ist, bedingt eine jeweils periodisch verzögerte Zunahme und ein Abklingen der thermisch induzierten Emission, vor bzw. nach Erreichen der maximalen Strahlertemperatur. Kapazitive bzw. vergleichbare elektronische Einkoppelverfahren gestatten eine Wechselspannungsymmetrierung des modulierten Detektionssignals. Durch Triggern des Nullpunkt-Durchlaufs kann der Phasenschaltpunkt für die phasenabhängige Signalverstärkung bestimmt werden. Während der Nutzsignalphase kann eine auf die Absorption des Meßgases optimierte Strahlertemperatur vorgelegt werden. Signalanteile während der thermischen Abkling- und Aufheizdauer können gegen die Nutzsignalphase kompensiert werden, um eine Störsignalelimination zu erzielen. Der Signalausgang ist wahlweise eine elektrische Spannung (0 bis 10 V) oder ein Strom (0/4 bis 20 mA).

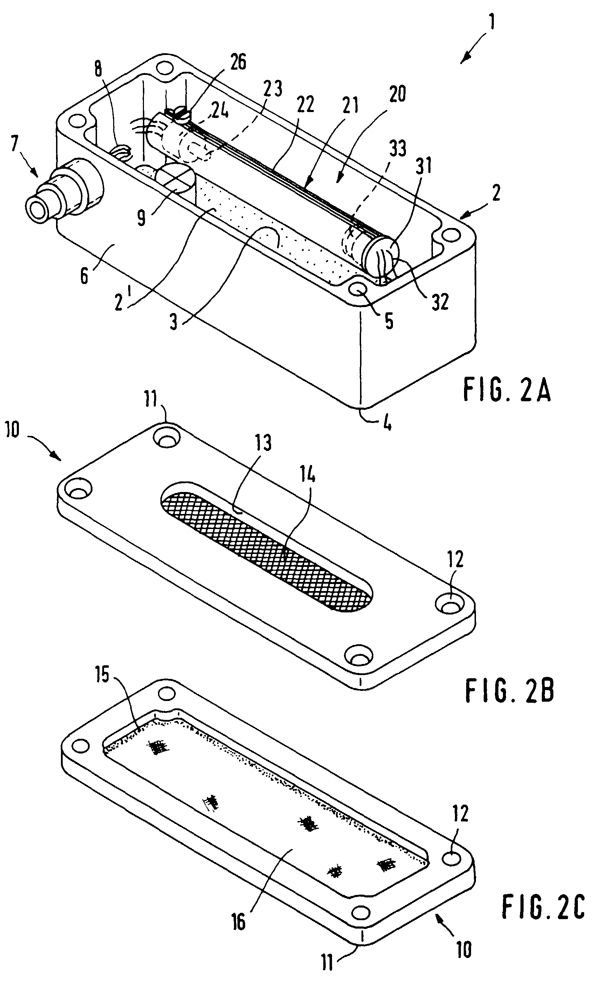

Zusammen mit einer integrierten Temperaturfühlerschaltung wird die Ausgabe eines temperaturkompensierten Signals ermöglicht. Eine andere Möglichkeit besteht darin, eine temperaturabhängige Spannungsquelle einzusetzen. Aus Figur 2a ist zu ersehen, eine mögliche Ausführungsform des erfindungsgemäßen Gasanalysators 20 zu ersehen. Das Gehäuse 2 nimmt die Elektronik auf, von der hier nur eine Platine 3 am Boden des Gehäuses 2 angedeutet ist. In den Ecken 4 des Gehäuses 2 befinden sich Gewindebohrungen 5. An einer Seitenwand 6 des Gehäuses 2 befindet sich der Signalausgang 7, der über Kabel 8 mit den Schaltungen auf der Platine 3 verbunden ist und auch der Energieversorgung dient. 9 bezeichnet einen Elektrolytkondensator 220 µF.

Die Figuren 2b und 2c zeigen einen Deckel 10 zum Verschließen des Gehäuses 2. Er weist an seinen vier Ecken 11 Bohrungen 12 auf. Der Deckel 10 wird auf das Gehäuse 2 aufgesetzt, so daß die Bolzen 5 und 12 fluchten, und wird verschraubt.

Der Deckel 10 weist ferner eine Öffnung 13 auf, die dem Gasdurchlaß dient. Die Öffnung 13 ist auf ihrer zur Außenatmosphäre gerichteten Seite mit einem Metallnetz 14 verschlossen. Auf der zur Meßküvette 21 hin ausgerichteten Seite, ist, wie aus Figur 2c ersichtlich, an das Metallnetz 14 bzw. die Innenfläche des Deckels 10 ein Metallfaservlies 16, befestigt, z.B. mit Klebstoff 15 aufgeklebt. Das Metallfaservlies 16 besteht vorzugsweise aus Fasern mit Durchmessern bis zu 2 µm, die in gleichmäßigen Flächengewichten zu Wirrfasern verliest und auf definierte Dicken gewalzt sind. Entsprechende Metallfaservliese besitzen Porositätsgrade bis zu 80% bei gleichzeitg sehr enger Porengrößenverteilung. Damit wird für das Meßgas eine großflächige Einlaßzone geschaffen, mit dem Vorteil verbesserter Diffusions- und Konvektionseigenschaften und geringerer Verschmutzungsneigung, was die Standzeit des Gasanalysators erhöht.

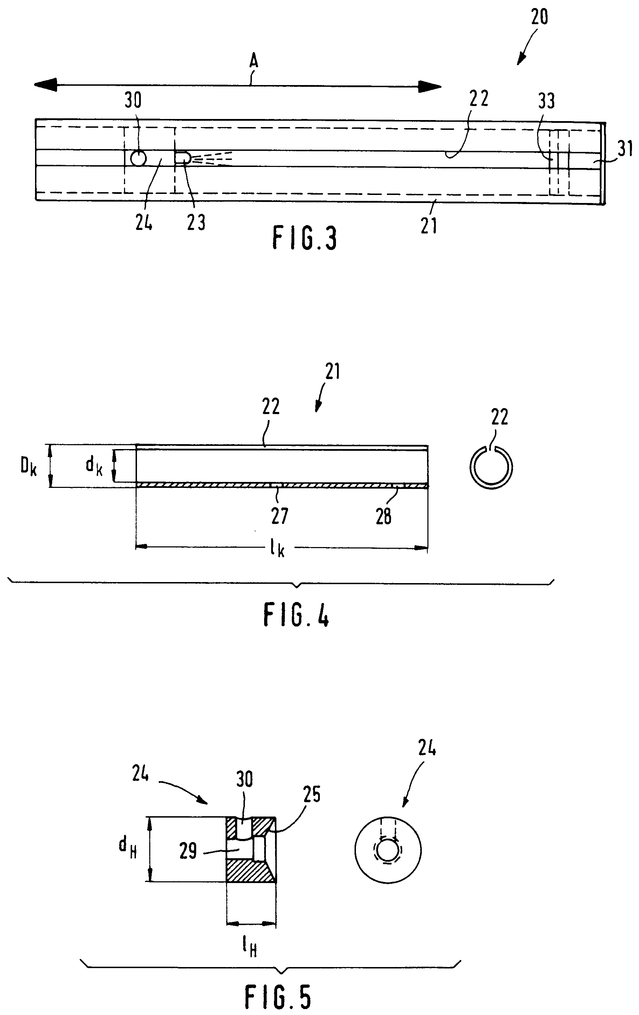

Aus den Figuren 2 und 3 geht hervor, daß die Meßküvette 21 des erfindungsgemäßen Gasanalysators 20 aus einem länglichen Röhrchen mit einem Längsschlitz 22 besteht, der in Figur 3 nicht maßstabsgetreu etwas zu groß dargestellt ist. Durch den zum Meßgaszutritt 21 hin orientierten Längsschlitz 22 kann das Meßgas durch Diffusion und Konvektion rasch zu- und abgeführt werden. Die Strahlungsquelle 23, im vorliegenden Fall eine Minitaturglühbirne, sitzt in einer Halterung 24 und wird von einem Reflektor 25 eingefaßt. In Figur 4 ist noch einmal im Detail für das Ausführungsbeispiel dargestellt, daß die Meßküvette 21 einen Außendurchmesser Dₖ von 10mm und einen Innendurchmesser dₖ von 8mm bei einer Länge lₖ von etwa 70mm hat. Der Längsschlitz 22 ist etwa 2mm breit. An der Unterseite der Meßküvette 21 gegenüber dem Längsschlitz 22 sitzen zwei Bohrungen 17, 28 mit M3-Gewinde, wobei die Bohrung 27 etwa 7,5mm vom hinteren Ende 21' der Meßküvette 21 und die Bohrung 26 etwa 37mm davon entfernt ist. Das Material ist V4A-Edelstahl.

Idealerweise befindet sich die Meßküvette 21 mit dem Längsschlitz 22 unmittelbar hinter dem Metallnetz 14 und schließt dicht damit ab. Dann ist das zu spülende Gasvolumen ziemlich genau das (geringe) Volumen der Meßküvetten, so daß kurze Ansprechzeiten realisierbar sind. Der Meßgasraum ist in diesem Fall dann eigentlich der gesamte geometrische Raum oberhalb des Metalldrahtnetzes (z.B. Büroraum, Hörsaal). Mit 2' ist ein Totraum im Gehäuse 2, der allerdings ausgespült werden muß, bezeichnet. Dieser Totraum 2' sollte gering gehalten werden.

In Figur 5 ist die Halterung 24 für die Strahlungsquelle 23 noch einmal dargestellt. Sie hat einen Durchmesser d_{H} von etwa 8mm, was dem Innendurchmesser dₖ der Meßküvette 21 entspricht und eine Länge l_{H} von 6mm. Eine zu einem Ende hin konisch erweiterte Durchgangsöffnung 29 nimmt die Strahlungsquelle 23 auf. Die konische Erweiterung ist als Reflektor 25 ausgebildet, der die Strahlungsquelle 23 umfaßt. Im rechten Winkel zur Durchgangsöffnung 29 weist die Halterung 24 eine weitere Bohrung 30 mit einem M2-Gewinde für die Klemmschraube 26 auf. Die Halterung 24 wird also in die Meßküvette 21 eingesetzt, wobei die Bohrung 30 zum Längsschlitz 22 hin orientiert ist. Dann wird die Klemmschraube 26 in die Bohrung 26 eingeschraubt. Der Kopf der Klemmschraube 30 ist breiter als der Längsschlitz 22, so daß beim Einschrauben in die Bohrung 30 eine Klemmwirkung zwischen der Klemmschraube 26 und der Meßküvette 21 bewirkt wird. Auf diese Weise kann die Halterung 24 mit der IR-Strahlungsquelle 23 im zum Meßgas hin geöffneten Längsschlitz 22 der Meßküvette in Richtung des Pfeils A in Figur 3 geführt werden.

In Figur 3 ist weiterhin ein Detektor 31 dargestellt, der an dem von der Strahlungsquelle 23 entfernten Ende 21' der Meßküvette 21 fixiert ist. Der Detektor 31 ist durch Leitungen 32 mit der Schaltung auf der Platine 3 verbunden. Der Detektor 31 besitzt eine möglichst große Detektorfläche, die im Ausführungsbeispiel etwa seiner Querschnittsfläche entspricht. Vor den Detektor 31 ist noch ein Interferenzfilter 33 geschaltet. Das Interferenzfilter kann aber auch in den Detektor integriert sein. Er ist im Ausführungsbeispiel für IR-Strahlung im Wellenlängenbereich von 4,24µm durchlässig. Die Länge der Meßstrecke, d.h. der Abstand zwischen der Strahlungsquelle 23 und dem Detektor 31, ist variabel und für unterschiedliche Gaskonzentrationsbereiche optimierbar.

Die einzelnen, die Optik des Sensors ausbildenden Bauelemente befinden sich bei diesem Ausführungsbeispiel im guten thermischen Kontakt. Im Zusammenhang mit der Führung der Strahlungsquelle 23 längs der Meßstrecke, der diffusen Reflexion an der Innenwand der Meßküvette 21 sowie durch die Verwendung eines Detektors 31 mit groß dimensionierter Detektorfläche, sind thermisch bedingte Dejustierungen der Optik und dadurch verursachte Meßfehler vernachlässigbar. Dieses hat Vorteile gegenüber Gassensoren mit aufwendigen Abbildungsoptiken bei Verwendung von Spiegeln, die präzise Justierungen und isotherm geführte mechanische Verbunde erfordern.

### Bezugszeichenliste

- 1: Gesamtvorrichtung
- 2: Gehäuse
- 2': Meßgasraum
- 3: Platine
- 4: Ecken von 2
- 5: Gewindebohrungen
- 6: Seitenwand von 2
- 7: Signalausgang
- 8: Kabel
- 9: Batterie
- 10: Deckel von 2
- 11: Ecken von 10
- 12: Bohrungen
- 13: Öffnung in 10
- 14: Metallnetz
- 15: Klebstoff
- 16: Metallfaservlies
- 20: Gasanalysator
- 21: Meßküvette
- 21': Ende von 21
- 22: Längsschlitz in 21
- 23: Strahlungsquelle
- 24: Halterung für 23
- 25: Reflektor
- 26: Klemmschraube
- 27,28: Bohrungen in 21
- 29: Durchgangsöffnung in 24
- 30: Bohrung in 24
- 31: Detektor
- 32: Leitungen
- 33: Interferenzfilter
- A: Verschiebungsrichtung der Lichtquelle
- lₖ: Länge von 21
- Dₖ: Außendurchmesser von 21
- dₖ: Innendurchmesser von 21
- l_{H}: Länge von 24
- d_{H}: Durchmesser von 24

## Patentansprüche

1. Gasanalysator (20) zur kontinuierlichen Bestimmung der Konzentration eines Gases in einem Gasgemisch, mit einer Meßküvette (21), einer darin angeordneten Strahlungsquelle (23), einem Detektor (31) und Einrichtungen zur Signalverarbeitung (3, 7), **dadurch gekennzeichnet**, daß die Strahlungsquelle (23) in der Meßküvette (21) verschieblich angeordnet ist.

2. Gasanalysator nach Anspruch 1, dadurch gekennzeichnet, daß die Strahlungsquelle (23) in einem in der Meßküvette (21) vorgesehenen Längsschlitz (22) verschieblich fixiert ist.

3. Gasanalysator nach Anspruch 2, dadurch gekennzeichnet, daß die Strahlungsquelle (23) mit einer Klemmschraube (26) fixiert ist.

4. Gasanalysator nach Anspruch 2, dadurch gekennzeichnet, daß die Strahlungsquelle (23) in eine Halterung (24) gehalten ist, die eine Bohrung (30) für Klemmschraube (25) aufweist.

5. Gasanalysator nach Anspruch 4, dadurch gekennzeichnet, daß die Halterung (24) einen Reflektor (25) aufweist.

6. Gasanalysator nach einem der vorhergehenden Ansprüche, dadurch gekennzeichnet, daß der Detektor (31) an dem von der Strahlungsquelle (23) entfernten Ende (21') der Meßküvette (21) befestigt ist.

7. Gasanalysator nach einem der vorhergehenden Ansprüche, dadurch gekennzeichnet, daß die Detektorfläche des Detektors (31) in etwa seiner Querschnittsfläche entspricht.

8. Gasanalysator nach einem der vorhergehenden Ansprüche, dadurch gekennzeichnet, daß die Meßküvette (21) in Form eines Metallröhrchens, vorzugsweise aus Aluminium oder Edelstahl, ausgebildet ist.

9. Gasanalysator nach einem der Ansprüche 2 bis 8, dadurch gekennzeichnet, daß der Längsschlitz (22) sich über die gesamte Länge der Meßküvette (21) erstreckt.

10. Vorrichtung nach einem der vorhergehenden Ansprüche, dadurch gekennzeichnet, daß die Meßküvette (21) eine diffus reflektierende Innenfläche aufweist.

11. Gasanalysator nach einem der vorhergehenden Ansprüche, dadurch gekennzeichnet, daß zwischen der Strahlungsquelle (23) und dem Detektor (31) ein Interferenzfilter (33) angeordnet ist, dessen Durchlaßbereich auf das Absorptionsmaximum einer spezifischen Absorptionsbande der zu bestimmenden Gaskomponente abgestimmt ist.

12. Gasanalysator nach Anspruch 11, dadurch gekennzeichnet, daß der Interferenzfilter (33) in den Detektor (31) integriert ist.

13. Gasanalysator nach einem der vorhergehenden Ansprüche, dadurch gekennzeichnet, daß er in einem mindestens teilweise gasdurchlässigen Gehäuse (2) angeordnet ist.

14. Gasanalysator nach Anspruch 13, dadurch gekennzeichnet, daß das Gehäuse (2) eine mit einem Metallfaservlies (16) bedeckte Öffnung (13) aufweist.

15. Gasanalysator nach Anspruch 13 oder 14, dadurch gekennzeichnet, daß die die Optik bildenden Bauelemente so in dem Gehäuse (2) angeordnet sind, daß sie in gutem thermischen Kontakt zueinander stehen.

16. Meßküvette (21) zur photometrischen Messung der Konzentration eines Gases in einem Gasgemisch, **dadurch gekennzeichnet**, daß sie in Form eines über deren gesamte Länge mit einem Längsschlitz (22) versehenen Röhrchens ausgebildet ist.

17. Meßküvette nach Anspruch 16, dadurch gekennzeichnet, daß sie aus Metall, z.B. Aluminium oder Edelstahl besteht.

18. Meßküvette nach Anspruch 16 oder 17, dadurch gekennzeichnet, daß ihre Innenfläche diffus reflektierend ist.

19. Meßküvette nach einem der Ansprüche 16 bis 18, dadurch gekennzeichnet, daß sie auf der dem Längsschlitz (22) gegenüberliegenden Seite mindestens eine Bohrung (27, 28) zur Fixierung in einem Gehäuse (2) aufweist.
